# EUROPÄISCHE PATENTANMELDUNG

(11) **EP 0 832 812 A2**
(43) Veröffentlichungstag der Anmeldung: **01.04.1998**
(21) Anmeldenummer: 97116654.1
(22) Anmeldetag: 24.09.1997
(51) Int. Cl.: B62J 11/00

(54) **Halterungseinrichtung zur Halterung eines Bügelschlosses**

(30) Priorität: 26.09.1996 DE 19639684
(71) Anmelder: Aug. Winkhaus GmbH & Co. KG, D-48291 Telgte (DE)
(72) Erfinder: Kortenbrede, Ludger, 48291 Telgte (DE)
(74) Vertreter: Weickmann, Heinrich, Dipl.-Ing.

(57) **Zusammenfassung**

Eine Halterungseinrichtung (30) für ein Langbügelschloß (10,12) wird an einem Zweirad-Rahmenteil (34) angebracht. Die Halterungseinrichtung (30) umfaßt einen Durchsteckkanal (38). Ein Bügelschenkel (16) kann durch diesen Durchsteckkanal (38) hindurchgesteckt werden. Nach Durchstecken des Bügelschenkels (16) wird der Schloßbügel (10) mit dem Schloßkörper (12) zusammengesteckt und verrastet. Der Bügelschenkel (16) weist auf seiner Umfangsfläche Drehsicherungsrippen auf (44), welche mit Drehsicherungsnuten (48) an der Innenumfangsfläche des Durchsteckkanals (38) drehsichernd zusammenwirken. Es sind deshalb verschiedene Winkeleinstellungen der Bügelebene gegenüber der Halterungseinrichtung (30) möglich. Es werden verschiedene Maßnahmen getroffen, um das Anbringen des Bügelschlosses (10,12) an der Halterungseinrichtung (30) zu erleichtern und ferner Maßnahmen um die Befestigung der Halterungseinrichtung (30) an dem jeweiligen Zweiradteil (34) zu erleichtern.

## Beschreibung

Die Erfindung betrifft eine Halterungseinrichtung zur Halterung eines Bügelschlosses, insbesondere Langbügelschlosses, an einer Tragkonstruktion, insbesondere einem mobilen Objekt, etwa einem Zweiradrahmen, diese Halterungseinrichtung ausgeführt mit einem Durchsteckkanal zum Durchstecken eines Bügelschenkels des Bügelschlosses, wobei der Bügelschenkel einen zur Aufnahme in dem Durchsteckkanal bestimmten Einsteckabschnitt aufweist und mit einem Eintauchabschnitt zum Eintauchen in eine Aufnahmebohrung eines Schloßkörpers ausgeführt ist, wobei weiter an der Außenumfangsfläche eines Drehsicherungsteils des Einsteckabschnitts und an der Innenumfangsfläche des Durchsteckkanals komplementäre Verunrundungsmittel vorgesehen sind, um mindestens eine definierte Winkellage des Bügelschenkels gegenüber dem Durchsteckkanal festzulegen, und wobei ein beim Einstecken des Bügelschenkels in den Durchsteckkanal dem Drehsicherungsteil vorauslaufender Teil des Einsteckabschnitts als ein Zentrierteil ausgebildet ist, welcher - bevor die Verunrundungsmittel des Einsteckabschnitts und des Durchsteckkanals beim Einstecken des Einsteckabschnitts in den Durchsteckkanal miteinander in drehhemmenden Eingriff treten - eine drehbehinderungsfreie Zentrierung des Einsteckabschnitts in dem Durchsteckkanal bewirkt.

Eine solche Halterungseinrichtung ist durch offenkundige Vorbenutzung einer Firma Kryptonite Corp. bekannt. Bei der bekannten Halterungseinrichtung ist der Einsteckabschnitt des Bügelschenkels, welcher in den Durchsteckkanal der Halterung eingesteckt werden soll, von einem Hülsenkörper gebildet, der an seinem, beim Einstecken nachlaufenden Ende radial erweitert, im Bereich dieser radialen Erweiterung geschlitzt und mit einer den Schlitz kreuzenden Klemmschraube versehen ist. Auf diese Weise bildet sich eine klobige Verdickung an dem Bügelschenkel nahe seinem in die Aufnahmebohrung des Schloßkörpers eintretenden Eintauchendes. Der Einsteckabschnitt ist auf dem größten Teil seiner in den Durchsteckkanal eindringenden Einstecklänge mit einer Keilnutenverzahnung versehen. Am schloßkörpernahen Ende, d.h. an dem beim Einstecken in den Durchsteckkanal vorlaufenden Ende ist ein nur ca. 5 mm langer Zentrierteil vorgesehen, der frei von Keilnuten ist. Dieser Zentrierteil läuft beim Einstecken des Bügelschenkels voraus in die Durchsteckbohrung ein und erlaubt eine gewisse Grobzentrierung. Diese Zentrierung reicht aber nicht aus, um auch nur annähernd eine Koaxialität zwischen der Achse des Durchsteckkanals und der Achse des Einsteckabschnitts sicherzustellen, so daß jegliches Verkippen des Bügelschenkels gegenüber der Achse des Durchsteckkanals noch möglich ist, wenn der Zentrierteil des Einsteckabschnitts bereits in den Durchsteckkanal eingetreten ist. Das Einstecken des Drehsicherungsteils des Bügelschenkels in den Durchsteckkanal wird dadurch erschwert, insbesondere, wenn man an eine Handhabung bei Nacht denkt.

Der Erfindung liegt die Aufgabe zugrunde, das Einführen des Bügelschenkels in den Durchsteckkanal zu erleichtern.

Zur Lösung dieser Aufgabe wird vorgeschlagen, daß der Zentrierteil einen Schlankheitsgrad s entsprechend seinem Länge/Durchmesser-Verhältnis von mindestens 1, vorzugsweise mindestens 1,5, höchst vorzugsweise mindestens 2,0 besitzt.

Durch den hohen Schlankheitsgrad in Verbindung mit einer engen Anpasung des Zentrierteils an den Innendurchmesser des bei beginnendem Einstecken besetztwerdenden Teils des Durchsteckkanals wird sichergestellt, daß, bevor die Verunrundungsmittel überhaupt in drehhemmendem Eingriff zueinander kommen können, der Bügelschenkel mit seiner Achse eine im wesentlichen koaxiale Lage zu der Achse des Durchsteckkanals einnimmt. Auf diese Weise wird das Einführen der bügelschenkelseitigen Verunrundungsmittel in die durchsteckkanalseitigen Verunrundungsmittel sehr erleichtert: Entweder man wählt durch Zufall von vorneherein eine solche Winkellage, daß die Verunrundungsmittel in Eingriff treten können, oder man kann durch einfaches Drehen ohne Verhakungsgefahr sicherstellen, daß nach Durchlaufen eines der Teilung der Verunrundungsmittel entsprechenden Winkels diese Verunrundungsmittel ineinander eingreifen können. Dabei ist es möglich, an dem Vorlaufende des Einsteckabschnitts oder/und an dem Vorlaufende des Eintauchabschnitts konische Anfasungen anzubringen, die das Einfädeln von Beginn des Einfädelungsvorgangs an erleichtern. Weiterhin ist es möglich, an den Enden der Verunrundungsmittel entweder des Einsteckabschnitts oder/und des Durchsteckkanals Einführungserleichterungsflächen vorzusehen, welche bei einem Drehen des Bügelschenkels nach erfolgter Zentrierung das Ineinandergleiten der Verunrundungsmittel zum Zwecke der Drehhemmung erleichtern.

Die eingangs beschriebene, durch offenkundige Vorbenutzung bekannte Ausführungsform hat noch einen weiteren gravierenden Nachteil: Durch relativ großen Durchmesser des Hülsenkörpers und insbesondere durch die große Ausladung im Bereich der den Schlitz und die Spannmittel aufnehmenden radialen Erweiterung wird die glatte und schlanke Struktur des Bügelschenkels in Frage gestellt. Dies erweist sich als nachteilig beim Durchfädeln des Bügelschenkels durch die Speichen eines zu sichernden Zweirads insofern, als die radial über die Außenumfangsfläche des Bügelschenkels vorstehenden Teile des Hülsenkörpers gegen Speichen anstoßen können, was im übrigen auch beim Zurückziehen des Schloßbügels aus einer Speichendurchgriffsstelung gilt.

Es wird deshalb in Weiterbildung der Erfindung vorgeschlagen, daß der Außendurchmesser des Zentrierteils zwar größer ist als der Außendurchmesser des Eintauchabschnitts, jedoch kleiner ist als das 1,4fache, vorzugsweise kleiner als das 1,3fache, des Außendurchmessers des Eintauchabschnitts. Weiter wird mit der gleichen Zielrichtung vorgeschlagen, daß der maximale radiale Vorsprung des Einsteckabschnitts oder eines an den Einsteckabschnitt anschließenden Nachlaufteils des Einsteckabschnitts gegenüber der Umfangsfläche eines an den Einsteckabschnitt bzw. den Nachlaufteil anschließenden scheitelnahen Bügelschenkelabschnitts kleiner ist als das 0,5fache, vorzugsweise kleiner als das 0,3fache, höchst vorzugsweise kleiner als das 0,2-fache, des halben Außendurchmessers des scheitelnahen Bügelschenkelabschnitts.

Für den Schutz gegen Verletzungsgefahr beim Berühren, aber auch im Hinblick auf einen hohen Verkaufs-Appeal des mit Halterungseinrichtung vereinigten Schlosses ist es vorteilhaft, wenn der Übergang von dem Drehsicherungsteil des Einsteckabschnitts zum scheitelnahen Bügelschenkelabschnitt bei vollständiger Aufnahme des Einsteckabschnitts in dem Durchsteckkanal wenigstens annähernd mit dem scheitelnahen Ende des Durchsteckkanals zusammenfällt.

Ausgewogene Verhältnisse hinsichtlich optimaler Zentrierung und wirksamer Drehsicherung ergeben sich, wenn die Länge des Zentrierteils des Einsteckabschnitts und die Länge des Drehsicherungsteils des Einsteckabschnitts jeweils mindestens 1/3 und weniger als 3/4 der Gesamtlänge des Einsteckabschnitts ausmachen.

Grundsätzlich ist es denkbar, daß die Verunrundungsmittel zum Zwecke der Drehsicherung etwa durch polygonale Gestaltung des Durchsteckkanals und des Bügelschenkels im Bereich des Einsteckabschnitts ausgeführt werden. Eine bevorzugte Ausführungsform besteht aber darin, daß die Verunrundungsmittel des Drehsicherungsteils von axial verlaufenden Drehsicherungsrippen und die Verunrundungsmittel des Durchsteckkanals von komplementären Drehsicherungsnuten gebildet sind. Bei einer solchen Ausführungsform mit Drehsicherungsrippen und Drehsicherungsnuten kann der Winkelabstand zwischen zwei unmittelbar aufeinander folgenden Winkeleinstellungen beispielsweise 45° sein. Es ist dies ein in der Praxis völlig ausreichendes Winkelmaß. Man kann bei diesem Winkelmaß die Anbringung eines Bügelschlosses an einem Zweiradrahmen an die jeweiligen Ausstattungs- und Beladungsverhältnisse des Zweirads in ausreichender Weise anpassen. Die Enden der Drehsicherungsrippen und der Drehsicherungsnuten, die beim Beginn des Eingriffs zusammentreten, können dachförmig gestaltet werden, so daß das Einstecken des Bügelschenkels in den Durchsteckkanal noch weiter erleichtert werden kann.

Der Zentrierteil oder/und der Drehsicherungsteil können eine im wesentlichen zylindrische Außenhüllfläche aufweisen mit der zugehörigen Achse jeweils in der Achse des Bügelschenkels. Dies ist wiederum vorteilhaft im Hinblick auf das Erleichtern des Durchfädelns des Bügelschenkels durch ein Speichenrad.

Um auch im Übergangsbereich zwischen dem Zentrierteil und dem Drehsicherungsteil des Einsteckabschnitts die Gefahr eines Anstoßens an Speichen möglichst zu vermeiden, wird weiter vorgeschlagen, daß der Außendurchmesser der Hüllfläche des Drehsicherunsteils zwar größer als der Außendurchmesser der Hüllfläche des Zentrierteils ist, jedoch weniger als das 1,2fache des letzteren beträgt.

Um ein Bügelschloß in der Halterungseinrichtung unbeweglich festzuhalten, kann man sich grundsätzlich auf die Schwerkraft verlassen, welche das Bügelschloß entweder mit dem Scheitelbereich oder mit dem Schloßkörper zur axialen Anlage an der Halterungseinrichtung bringt. Legt man aber auf eine geräuschvermeidende, sichere Festlegung des Bügelschlosses auch bei Befahren von rauhen Fahrflächen Wert, so wird empfohlen, daß an dem Bügelschloß und an der Halterungseinrichtung Axialanschlagmittel vorgesehen sind, welche einer zuverlässigen axialen Festlegung des Bügelschlosses gegenüber der Halterungseinrichtung dienen. Eine bevorzugte axiale Bewegungssicherung besteht dabei darin, daß eine erste Gruppe von Axialanschlagmitteln bügelschenkelseitig von schloßkörpernahen Enden von Drehsicherungsrippen des Drehsicherungsteils und kanalseitig von den schloßkörpernahen Enden von Drehsicherungsnuten des Durchsteckkanals gebildet sind und daß eine zweite Gruppe von Axialanschlagmitteln von einer Anschlagfläche der Halterungseinrichtung am Ausgang des Durchsteckkanals und einer Anschlagfläche des Schloßkörpers gebildet ist. Diese Art der Axialsicherung vermeidet ebenfalls denkbare Verrastungsmittel zur axialen Schloßsicherung, die entweder das Einsetzen und Entnehmen des Schlosses in die Halterungseinrichtung erheblich erschweren, wenn sie schwergängig verrastbar und entrastbar ausgeführt sind, oder unsicher bleiben und Verschleiß ausgesetzt sind, wenn sie leichtgängig verrastbar und entrastbar ausgeführt sind.

Grundsätzlich ist es möglich, die Verunrundungsmittel und die Zentrierfläche unmittelbar an dem Bügelschenkelmaterial aussuformen. Da aber die Bügelschenkel sicherheitsbedingt in der Regel aus einem sehr harten Metallwerkstoff hergestellt werden, gibt man einer Lösung den Vorzug, bei welcher der Einsteckabschnitt und ein etwa zugehöriger Nachlaufteil von einer Schenkelummantelungshülse gebildet ist, welche auf dem Bügelschenkel unverdrehbar festgelegt ist. Entsprechend den vorangehenden Ausführungen über die Maßnahmen zur Verhinderung der Speichenkollision wird dabei weiter empfohlen, daß die Außenumfangsfläche der Schenkelummantelungshülse in ihrem schloßkörperfernen Endbereich rotationssymmetrisch bezogen auf die Achse des Bügelschenkels ist. Dies ist ein entscheidender Vorteil gegenüber der bekannten Ausführungsform, bei der im schloßkörperfernen Endbereich eine radial weit ausladende Klemmschelle ausgebildet ist.

Aus Gründen der Vermeidung von Verletzungsgefahr und eines ordentlichen formschönen Aussehens wird auch hier empfohlen, daß die Schenkelummantelungshülse - wenn vollständig in den Durchsteckkanal eingesteckt - an ihrem schloßkörperfernen Ende bündig zum schloßkörperfernen Ausgang des Durchsteckkanals liegt.

Weiter wird aus Gründen der Vermeidung von Kollisionen bei Durchführung des Bügelschenkels durch einen Speichenkranz vorgesehen, daß die Schenkelummantelungshülse auf dem Bügelschenkel durch Spannmittel unverdrehbar festgelegt ist, welche rotationssymmetrisch in bezug auf die Bügelschenkelachse sind. Verwendet man eine Spannhülse zum Anpressen der den Einsteckabschnitt definierenden Schenkelummantelungshülse, so wird empfohlen, daß diese Spannhülse den Zentrierteil umschließt, also diesen bildet. Die Zentrierwirkung wird dadurch noch verbessert, insbesondere wenn nach einer bevorzugten Ausgestaltung die Spannhülse als metallisches Rohrstück hergestellt ist, das wiederum an seinen Enden, wo notwendig, konisch angefast sein kann. Die Schenkelummantelungshülse und auch die Halterungseinrichtung können im wesentlichen aus Kunststoff hergestellt sein. Wenn man Geräusche, die durch unvermeidliche Restbewegungsmöglichkeiten des Bügelschenkels in dem Durchsteckkanal entstehen könnten, dämpfen will, so wird empfohlen, daß die Schenkelummantelungshülse aus einem im Vergleich zum Werkstoff der Halterungseinrichtung weicheren Werkstoff hergestellt ist.

Eine besonders wackelsichere Lösung ergibt sich dann, wenn wenigstens ein Teil des Bügelschenkels in einem entsprechend langen Teil des Durchsteckkanals unter axialer Verspannung axial festgelegt ist, indem eine axiale Kompressionsstrecke des Umgebungsbereichs des Durchsteckkanals von einer axialen Zugstrecke des Bügelschenkels unter Kompression gehalten ist. Um zur Herstellung der axialen Verspannung keine allzu enge Tolerierung der beteiligten Komponenten vornehmen zu müssen, wird empfohlen, daß in der axialen Kompressionsstrecke ein weichelastischer Kompressionspuffer enthalten ist. Dabei kann der Kompressionspuffer zwischen einem schloßkörpernahen Ausgang des Durchsteckkanals und einer Anschlagfläche des Schloßkörpers liegen. Er kann an der Halterungseinrichtung angebracht sein.

Wählt man eine Lösung mit axialer Verspannung des Bügelschenkels in dem Durchsteckkanal und benutzt man den Schloßkörper als einen Anschlagteil, welcher der Aufbringung der axialen Verspannung dient, so wird empfohlen, daß der Schloßkörper mit einem Schließwerk ausgerüstet ist, welches beim Aufstecken des Schloßkörpers auf den Bügelschenkel selbsttätig mit dem Bügelschenkel in Verriegelungseingriff tritt, dieses aus der Überlegung heraus, daß das Aufbringen der axialen Verspannung beim Zusammenstecken von Schloßkörper und Schloßbügel den Einsatz zweier Hände verlangt, so daß gewisse Schwierigkeiten auftreten könnten, wenn gleichzeitig auch noch zur Herstellung des Verriegelungseingriffs eine Schlüsselbetätigung durchgeführt werden müßte. Es soll aber selbstverständlich nicht ausgeschlossen werden, daß das Schließwerk durch Schlüsselbetätigung verriegelt wird, wenn eine ergonomische örtliche Zuordnung des Schließzylinders zu den üblichen Angriffsstellen der Hand am Schloßkörper gewählt wird.

Benutzt man eine Schenkelummantelungshülse, um die für den Zentrierteil und den Drehsicherungsteil notwendigen Formationen am Bügelschenkel anzubringen, so wird empfohlen, daß die den Einsteckabschnitt bildende Schenkelummantelungshülse durch axiale Positionierungsmittel an dem Bügelschenkel festgelegt ist. Auf diese Weise kann die Montage der Schenkelummantelungshülse vereinfacht und zusätzlich gesichert werden. Als axiale Positionierungsmittel kommen dabei insbesondere Ringschultern am Bügelschenkel in Frage. Der Bügelschenkel kann in herkömmlicher Weise von einem Ummantelungsschlauch, insbesondere einem Ummantelungsschlauch aus weichelastischem Kunststoff oder Gummi, ummantelt sein. Wenn im vorstehenden bei der Beschreibung von Durchmesserverhältnissen vom Durchmesser des Bügelschenkels die Rede war, so ist damit der Durchmesser von Bügelschenkel + Ummantelungsschlauch gemeint.

Nach einem weiteren Aspekt der Erfindung wird ausgegangen von einer Halterungseinrichtung zur Halterung eines Bügelschlosses, insbesondere Langbügelschlosses, an einer Tragkonstruktion, insbesondere einem mobilen Objekt, etwa einem Zweiradrahmen, diese Halterungseinrichtung ausgeführt mit einem Durchsteckkanal zum Durchstecken eines Bügelschenkels des Bügelschlosses, wobei der Bügelschenkel einen zur Aufnahme in dem Durchsteckkanal bestimmten Einsteckabschnitt aufweist und mit einem Eintauchabschnitt zum Eintauchen in eine Aufnahmebohrung eines Schloßkörpers ausgeführt ist, wobei weiter an der Außenumfangsfläche eines Drehsicherungsteils des Einsteckabschnitts und an der Innenumfangsfläche des Durchsteckkanals komplementäre Verunrundungsmittel vorgesehen sind, um mindestens eine definierte Winkellage des Bügelschenkels gegenüber dem Durchsteckkanal festzulegen und wobei der Einsteckabschnitt von einer den Bügelschenkel unverdrehbar umschließenden Schenkelummantelungshülse gebildet ist; für eine solche Halterungseinrichtung wird vorgeschlagen, daß die Schenkelummantelungshülse auf dem Bügelschenkel durch einen geschlossenen Spannring festgespannt ist.

Dabei kann der Spannring als ein Metallrohrabschnitt ausgebildet sein.

Die Lage des Spannrings kann an sich beliebig sein; sie kann dem Drehsicherungsteil in Einsteckrichtung nachlaufend angeordnet sein; bevorzugt wird allerdings eine Lösung gewählt, bei welcher der Spannring einen Zentrierteil der Schenkelummantelungshülse umschließt, welcher einem Drehsicherungsteil der Schenkelummantelungshülse beim Einstecken in den Durchsteckkanal vorausläuft.

Unter einem weiteren Aspekt der Erfindung wird ausgegangen von einer Halterungseinrichtung zur Halterung eines Bügelschlosses, insbesondere Langbügelschlosses, an einer Tragkonstruktion, insbesondere einem mobilen Objekt, etwa einem Zweiradrahmen, diese Halterungseinrichtung ausgeführt mit einem Durchsteckkanal zum Durchstecken eines Bügelschenkels des Bügelschlosses, wobei der Bügelschenkel einen zur Aufnahme in dem Durchsteckkanal bestimmten Einsteckabschnitt aufweist und mit einem Eintauchabschnitt zum Eintauchen in eine Aufnahmebohrung eines Schloßkörpers ausgeführt ist, wobei weiter an der Außenumfangsfläche eines Drehsicherungsteils des Einsteckabschnitts und an der Innenumfangsfläche des Durchsteckkanals komplementäre Verunrundungsmittel vorgesehen sind, um mindestens eine definierte Winkellage des Bügelschenkels gegenüber dem Durchsteckkanal festzulegen, und wobei der Bügelschenkel an dem Durchsteckkanal gegen axiale Verschiebung durch Anschlagmittel feststellbar ist. Dabei wird vorgeschlagen, daß die Anschlagmittel eine erste Gruppe von Anschlagflächen umfassen, welche beim Einschieben des Einsteckabschnitts in den Durchsteckkanal zusammentreten, und eine zweite Gruppe von Anschlagflächen, welche beim Zusammenstecken des Eintauchabschnitts und der Aufnahmebohrung des Schloßkörpers zusammentreten.

Diese Gestaltung wird deshalb als günstig angesehen, weil sie baulich einfach ist und ergonomisch einfach zu handhaben ist.

Im Hinblick auf die Wackelsicherheit wird dabei weiter vorgeschlagen, daß ein zwischen der ersten Gruppe und der zweiten Gruppe von Anschlagmitteln sich erstreckender Teil des Bügelschenkels in einem entsprechenden Teil des Durchsteckkanals unter axialer Verspannung festgelegt ist, indem eine zwischen der ersten Gruppe von Anschlagmitteln und der zweiten Gruppe von Anschlagmitteln liegende Kompressionsstrecke des Umgebungsbereichs des Durchsteckkanals von einer zwischen diesen beiden Gruppen von Anschlagmitteln gelegenen axialen Zugstrecke des Bügelschenkels unter Kompression gehalten ist.

Ein Aufbau ohne allzu enge Tolerierung von Einzelkomponenten wird dabei erleichtert, wenn in der axialen Kompressionsstrecke ein weichelastischer Kompressionspuffer enthalten ist. Diese Gestaltung ermöglicht auch das Zusammenstecken des Schloßbügels und des Schloßkörpers gegen relativ weiche Federkraft.

Der Kompressionspuffer kann zwischen einem schloßkörpernahen Ausgang des Durchsteckkanals und einer Anschlagfläche des Schloßkörpers liegen und vorzugsweise an der Halterungseinrichtung befestigt sein, wobei er gleichzeitig noch Dichtfunktion übernehmen kann.

Nach einem weiteren Aspekt der Erfindung wird ausgegangen von einer Halterungseinrichtung zur Halterung eines Bügelschlosses, insbesondere Langbügelschlosses, an einer Tragkonstruktion, insbesondere einem mobilen Objekt, etwa einem Zweiradrahmen, diese Halterungseinrichtung ausgeführt mit einem Durchsteckkanal zum Durchstecken eines Bügelschenkels des Bügelschlosses, wobei der Bügelschenkel einen zur Aufnahme in dem Durchsteckkanal bestimmten Einsteckabschnitt aufweist und mit einem Eintauchabschnitt zum Eintauchen in eine Aufnahmebohrung eines Schloßkörpers ausgeführt ist, wobei weiter an der Außenumfangsfläche eines Drehsicherungsteils des Einsteckabschnitts und an der Innenumfangsfläche des Durchsteckkanals komplementäre Verunrundungsmittel vorgesehen sind, um mindestens eine definierte Winkellage des Bügelschenkels gegenüber dem Durchsteckkanal festzulegen; dabei wird im Hinblick auf Geräuschdämpfung vorgeschlagen, daß der Einsteckabschnitt von einer Schenkelummantelungshülse aus Kunststoff gebildet ist und daß der Durchsteckkanal in Kunststoff ausgeführt ist, wobei der Kunststoff der Schenkelummantelungshülse weicher ist als der den Durchsteckkanal begrenzende Kunststoff.

Die Erfindung befaßt sich weiter mit einer Befestigungseinrichtung zum Befestigen einer Halterungseinrichtung der vorher beschriebenen Art an einem Zweiradrahmen, wobei die Befestigungseinrichtung auch zur Befestigung anderer Zweiradkomponenten an einem Rahmenrohr verwendet werden kann, beispielsweise zur Befestigung eines Flaschenhalters an einem Rahmenrohr.

Es wird ausgegangen von einer Befestigungseinrichtung zur Befestigung eines Zweirad-Zubehörteils an einem Rahmenrohr des Zweirads, umfassend ein Zugband zum Umschließen des Rahmenrohrs, einen Ringschluß- und Spannkörper in Verbindung mit dem Zugband, wobei nach Herstellung eines Ringschlusses ein Ringschluß-Überlappungsbereich des Zugbandes gebildet ist und dieser Ringschluß durch mindestens ein in dem Ringschluß- und Spannkörper abgestütztes, das Zugband durchdringendes Ringschlußsicherungsmittel gegen Ringschlußauflösung gesichert ist, wobei weiter der Ringschluß- und Spannkörper innerhalb eines an dem Rahmenrohr oder/und dem Zugband im Bereich des Rahmenrohrs abgestützten Stützgerüsts aufgenommen ist und wobei mindestens ein Gewindespanntrieb zwischen dem Stützgerüst und dem Ringschluß- und Spannkörper vorgesehen ist.

Eine solche Befestigungseinrichtung ist aus der EP 437 211 B1 bekannt. Nach dem Ausführungsbeispiel dieser bekannten Befestigungseinrichtung dient ein und dieselbe selbstschneidende Schraube sowohl als Ringschlußmittel für das Zugband als auch als Gewindespanntrieb für das Einziehen des Ringschluß- und Spannkörpers in Richtung auf das Stützgerüst. Dabei tritt notwendigerweise während des Heranholens des Ringschluß- und Spannkörpers an das Stützgerüst eine Gewindebewegung relativ zu den durchstoßenen Bereichen des Zugbands ein, während diese gleichzeitig unter steigende Ringspannung gesetzt werden. Dies kann zu einer Beschädigung oder Zerstörung des Zugbands an der Durchstoßungsstelle führen und es notwendig machen, das Material des Zugbands stärker zu wählen als im Hinblick auf eine leichte Handhabung und Anpassung an Rohre unterschiedlichen Durchmessers erwünscht. Um hier Abhilfe zu schaffen, wird vorgeschlagen, daß der Gewindespanntrieb an dem Ringschluß- und Spannkörper ohne Durchdringung des Zugbands angreift. Bei dieser Ausführungsform tritt zwar immer noch im Durchstoßungsbereich eine Zugbelastung des Zugbands ein, jedoch nicht gleichzeitig mit einer Gewindebewegung relativ zu der Durchstoßungsstelle. Es hat sich gezeigt, daß bei erfindungsgemäßer Gestaltung die Gefahr eines Ausreißens des Zugbands im Bereich der Durchstoßungsstelle verringert ist, so daß die Wandstärke des Zugbands verringert werden kann.

Eine bevorzugte Ausführungsform der Befestigungseinrichtung besteht darin, daß der Ringschluß- und Spannkörper einen Zugband-Durchtrittskanal aufweist, durch welchen Endabschnitte des Zugbands einander überlappend hindurchtreten, wobei das mindestens eine Ringschlußsicherungsmittel von einem Stift oder einer Schraube gebildet ist, welche innerhalb des Ringschluß- und Spannkörpers den Durchtrittskanal und innerhalb des Durchtrittkanals die sich überlappenden Teile des Zugbands durchdringt und ggf. zwischen Begrenzungswänden des Durchtrittskanals verklemmt.

Um das Anbringen der Befestigungseinrichtung an einem Zweiradrahmen insbesondere in kleineren Werkstätten oder beim selbstbastelnden Fahrradfahrer zu erleichtern, wird vorgeschlagen, daß der Stift bzw. die Schraube in dem Ringschluß- und Spannkörper einen unverlierbaren Sitz bereits vor dem Durchdringen des Durchtrittskanals besitzt.

Es ist vorteilhaft, wenn das Zugband zum Durchstoßenwerden von dem Stift bzw. der Schraube an beliebiger Stelle ohne Vorbohren oder Vorverformen ausgebildet ist. Der Vorteil liegt darin, daß dann eine Anpassung an unterschiedliche Rohrdurchmesser keinerlei Vorbereitungsmaßnahmen, sei es beim Hersteller, sei es beim Verarbeiter, erforderlich macht.

Das Zugband kann ein Metallband sein, das wegen der hohen Zugfestigkeit sehr dünn ausgeführt werden kann.

Trotz der Herstellung von Zugband einerseits und Ringschluß- und Spannkörper andererseits aus verschiedenen Werkstoffen ist es möglich, das Assemblieren von Zugband einerseits und Ringschluß- und Spannkörper andererseits auf einfachste Weise vorzunehmen, und zwar dadurch, daß das Zugband an einem Ende mit Formschlußmitteln ausgeführt ist, welche nach Durchziehen des Zugbands durch den Durchtrittskanal in Formschlußeingriff mit Gegenformschlußmitteln des Ringschluß- und Spannkörpers treten.

Das mindestens eine Ringschlußsicherungsmittel und der mindestens eine Gewindespanntrieb lassen sich ohne Kollision zwischen Gewindespanntrieb und Zugband in der Weise unterbringen, daß der mindestens eine Gewindespanntrieb einen Spannbolzen umfaßt, welcher in Achsrichtung des Ringschlusses seitlich des Zugbands an diesem vorbeigeht.

Um ein Abnehmen der Bügelschloßhalterung samt Bügelschloß durch einen Unbefugten zu verhindern, ist vorgesehen, daß der mindestens eine Gewindespanntrieb eine Spannwerkzeug-Angriffsstelle aufweist, welche bei Anbringung eines Bügelschlosses an dem als Bügelschloßhalterung ausgebildeten Zweirad-Zubehörteil unzugänglich ist. Dabei kann man etwa so vorgehen, daß für den Zutritt des Spannwerkzeugs zu der Spannwerkzeug-Angriffsstelle ein Werkzeugzutrittskanal in dem Zubehörteil vorgesehen ist, welcher den Durchsteckkanal für den Bügelschenkel kreuzt und nach Einsetzen eines Bügelschenkels in diesen Durchsteckkanal verschlossen ist.

Die Montage der Befestigungseinrichtung an einem Zweiradrahmen kann dadurch erleichtert werden, daß ein Gewindebolzen mit Spannwerkzeug-Angriffsstelle des Gewindespanntriebs unverlierbar in dem Zweirad-Zubehörteil aufgenommen und drehbar gelagert ist und daß eine zugehörige Mutter des Gewindespanntriebs in dem Ringschluß- und Spannkörper unverlierbar aufgenommen ist, wobei in dem Ringschluß- und Spannkörper eine Zentrierbohrung vorgesehen ist, in welche beim Aufsetzen des Stützgerüsts auf den Ringschluß- und Spannkörper der Gewindebolzen eintritt und so den Zugang zu der Gewindebohrung der Spannmutter findet.

Die beiliegenden Figuren erläutern die Erfindung anhand eines Ausführungsbeispiels; es stellen dar:
- Fig. 1: eine perspektivische Gesamtübersicht, teilweise aufgebrochen, teilweise in Explosionsdarstellung eines Langbügelschlosses im Zusammenwirken mit einer Halterungseinrichtung und einer Befestigungseinrichtung dieser Halterungseinrichtung zur Befestigung letzterer an einem Rahmenrohr eines Fahrrads;
- Fig. 2: einen Schnitt nach Linie II-II der Fig. 1;
- Fig. 3: eine Ansicht in Pfeilrichtung III der Fig. 1 auf eine Schenkelummantelungshülse;
- Fig. 4: eine Endansicht auf die Schenkelummantelungshülse gemäß Fig. 3 in Pfeilrichtung IV der Fig. 3;
- Fig. 5: einen Querschnitt durch die Schenkelummantelungshülse gemäß Fig. 3 längs Linie V-V der Fig. 3;
- Fig. 6: einen Längsschnitt durch die Schenkelummantelungshülse gemäß Fig. 3 längs Schnittlinie VI-VI der Fig. 3;
- Fig. 7: eine Detail bei VII der Fig. 3 in einer die Längsmittellinie einer Drehsicherungsrippe enthaltenden Schnittebene;
- Fig. 8: ein Detail bei VIII der Fig. 3 in einer Schnittebene gemäß Linie VIII-VIII der Fig. 5;
- Fig. 9: ein Detail bei VII der Fig. 3;
- Fig. 10: einen Längsschnitt durch eine Spannhülse;
- Fig. 11: einen Schnitt nach Linie XI-XI gemäß Fig. 1 zur Darstellung von Details einer Befestigungseinrichtung;

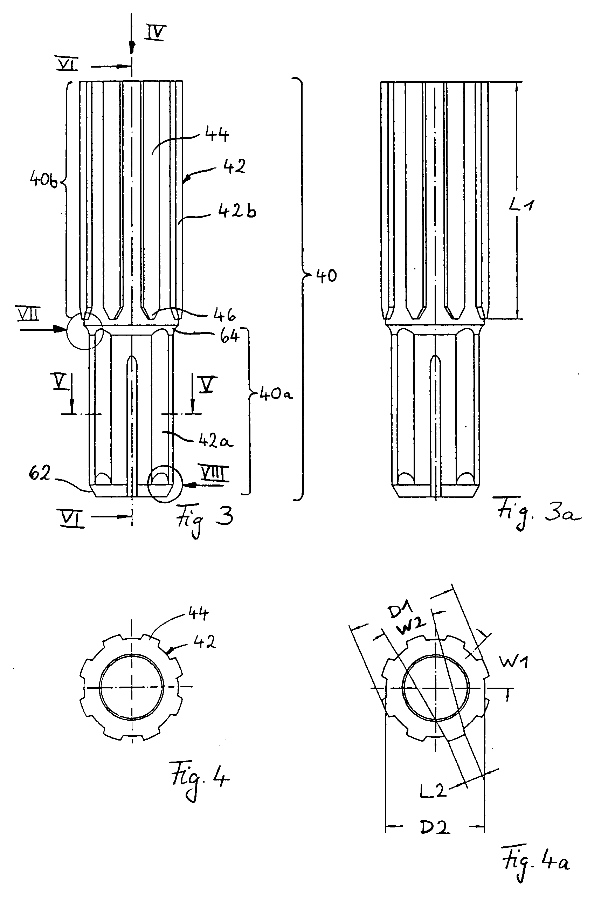

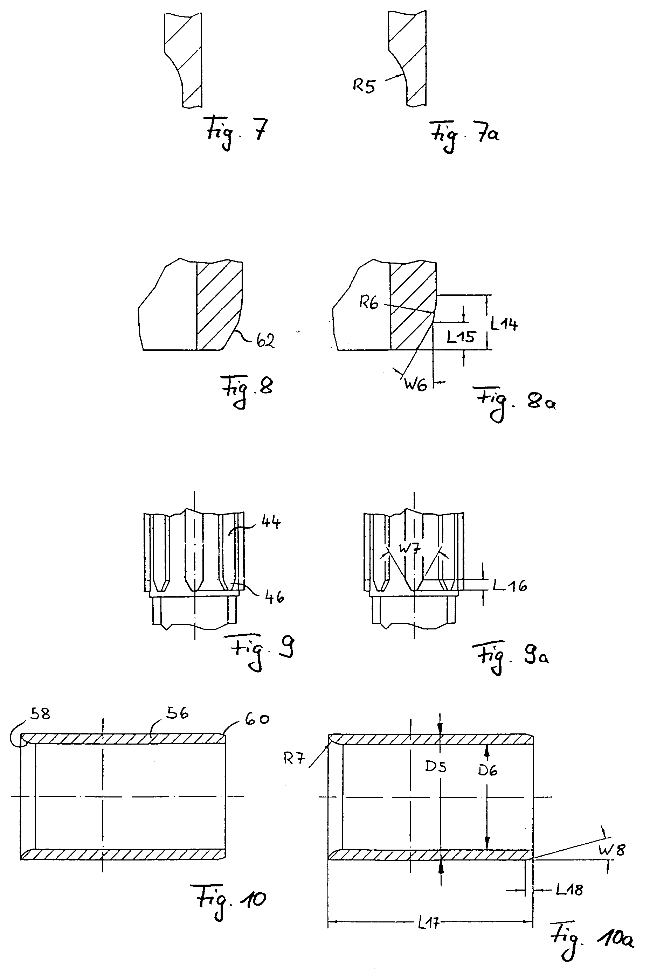

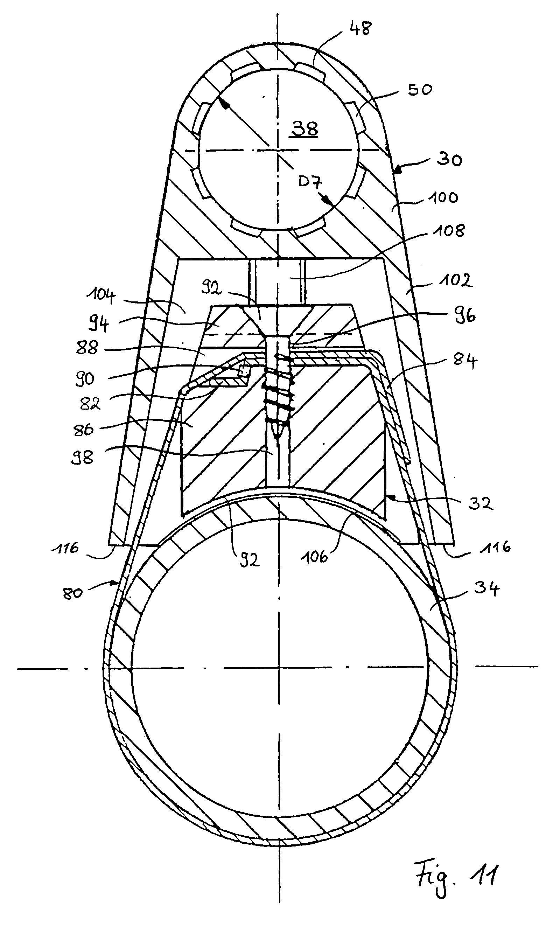

- Fig. 3a bis 11a: Vermaßungsskizzen zu dem Ausführungsbeispiel, wobei die Fig. 3a bis 10a jeweils den Fig. 3 bis 10 entsprechen und Fig. 11a einen Schloßbügel darstellt.

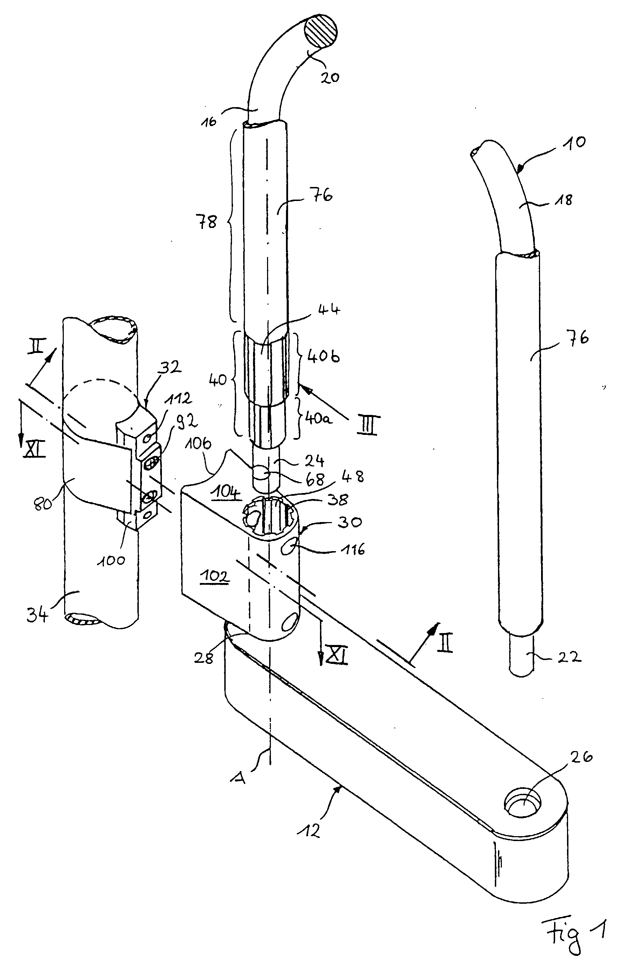

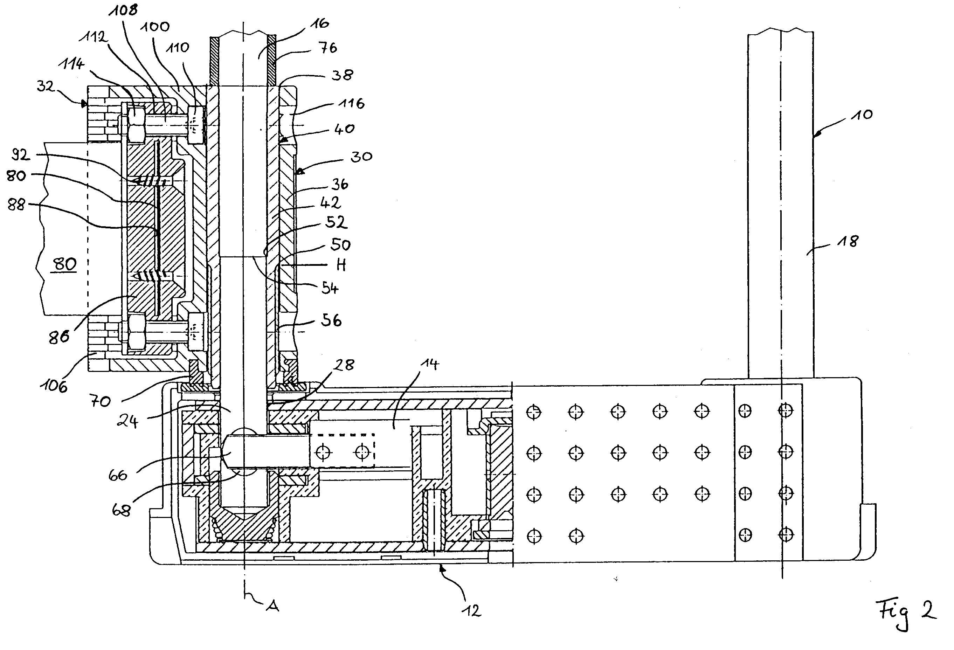

In den Fig. 1 und 2 erkennt man ein Langbügelschloß mit einem Schloßbügel 10 und einem Schloßkörper 12, der ein Schließwerk 14 enthält. Der Schloßbügel 10 weist zwei Bügelschenkel 16 und 18 auf, die über einen Scheitelbereich 20 miteinander verbunden sind. Die schloßkörpernahen Enden der Bügelschenkel 16 und 18 sind als Eintauchabschnitte 22 und 24 ausgebildet, die zum Eintauchen in Bohrungen 26 und 28 des Schloßkörpers 12 bestimmt und bemessen sind und dort durch das Schließwerk 14 verriegelt werden können.

Zum Mitführen des Bügelschlosses an einem Fahrrad während der Fahrt ist eine Halterungseinrichtung 30 vorgesehen, die durch eine Befestigungseinrichtung 32 an einem Rahmenrohr 34 angebracht wird. Die Halterungseinrichtung 30 ist dabei so ausgebildet, daß der dem Rahmenrohr 34 benachbarte Bügelschenkel im wesentlichen parallel zu dem Rahmenrohr verläuft.

Es wird nun zunächst die Halterungseinrichtung 30 im Zusammenwirken mit dem Bügelschenkel 16 betrachtet und es wird hierzu zunächst auf die Fig. 2 verwiesen. Die Halterungseinrichtung 30 umfaßt einen Kunststoffkörper 36 mit einem Durchsteckkanal 38. Beim Mitführen des Bügelschlosses während der Fahrt nimmt der Durchsteckkanal 38 einen Einsteckabschnitt 40 des Bügelschenkels 16 auf. Der Einsteckabschnitt 40 ist durch Aufbringung einer Schenkelummantelungshülse 42 gebildet, die im einzelnen in den Fig. 3 bis 9 dargestellt ist. Der Einsteckabschnitt 40 setzt sich zusammen aus einem Zentrierteil 40a und einem Drehsicherungsteil 40b, wobei der Zentrierteil 40a einem Teil 42a der Schenkelummantelungshülse 42 und der Drehsicherungsteil 40b einem Teil 42b der Schenkelummantelungshülse 42 entspricht.

Die Schenkelummantelungshülse ist beispielsweise aus Polyamid hergestellt, während der Kunststoffkörper 36 aus einem härteren Kunststoff, beispielsweise Polyurethan, hergestellt ist.

Wie aus Fig. 3 zu ersehen, weist die Schenkelummantelungshülse 42 im Bereich des Drehsicherungsteils 40b Drehsicherungsrippen 44 auf, welche an ihren unteren Enden in dachförmige Einführschrägen 46 auslaufen.

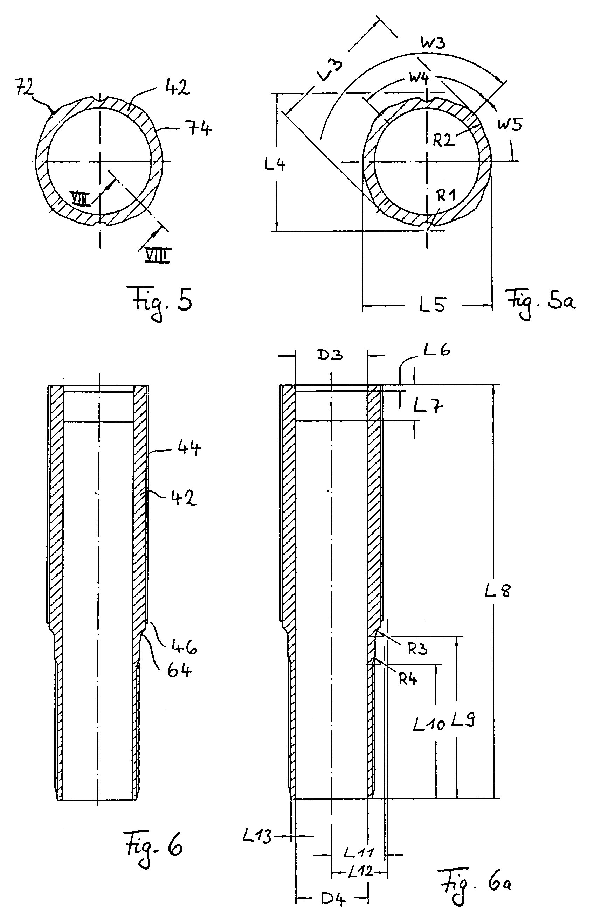

In einer der Winkelteilung der Drehsicherungsrippen 44 entsprechenden Teilung sind an der Innenumfangsfläche des Durchsteckkanals 38, wie aus Fig. 1 und 11 zu ersehen, Drehsicherungsnuten 48 vorgesehen. Der Teilungswinkel W1 ist in Fig. 4a angedeutet und beträgt beispielsweise 45°, so daß der Bügelschenkel 16 in 45°-Schritten um die Achse A verdreht in dem Durchsteckkanal 38 aufgenommen und gegen Verdrehen gesichert werden kann. Die dachförmigen Einführschrägen 46 stoßen beim Einführen des Einsteckabschnitts 40 in den Durchsteckkanal 38 gegen Nutendflächen 50, die sich gemäß Fig. 2 auf der Höhe H befinden. Die Drehsicherungsnuten 48 können an ihren oberen Enden, wie aus Fig. 1 ersichtlich, entsprechend der Gestaltung der dachförmigen Einführungsschrägen 46 trichterförmig erweitert sein, so daß das Einfädeln der Drehsicherungsrippen 44 in die Drehsicherungsnuten 48 weiter erleichtert ist.

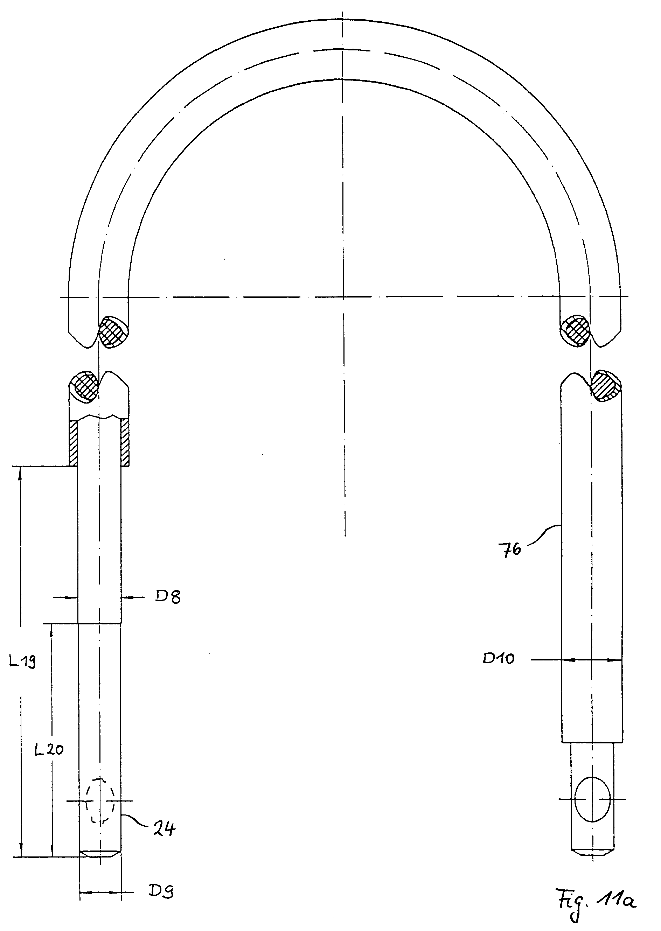

Die Schenkelummantelungshülse 42 ist auf den Bügelschenkel 16 aufgesteckt und in axialer Richtung durch eine Innenschulter 52 positioniert, die an einer Stufe 54 des Bügelschenkels 16 anstößt. Weiterhin ist die Schenkelummantelungshülse 42 auf dem Bügelschenkel 16 gegen Drehung dadurch gesichert, daß ihr Bereich 42a von einem Spannring 56 umschlossen ist, der nach Aufschieben der Schenkelummantelungshülse 42 auf den Bügelschenkel 16 auf den Bereich 42a aufgepreßt wird. Die Spannhülse 56 ist zur Erleichterung des Aufpressens an ihrem einen Ende mit einer konischen Innenabschrägung 58 (Fig. 10) versehen und an ihrem anderen Ende mit einer konischen Außenabschrägung 60. Die Außenoberfläche des Zentrierteils 40a ist demnach von der Spannhülse 56 gebildet, die von einem dünnwandigen Metallrohrabschnitt gewonnen wird. Der Außendurchmesser D5 der Spannhülse ist ein klein wenig kleiner als der Innendurchmesser D7 des Durchsteckkanals 38. Das in Fig. 3 untere Ende des Zentrierbereichs 42a der Schenkelummantelungshülse ist mit einer konischen Anfasung 62 versehen. Im übergangsbereich zwischen dem Zentrierbereich 42a und dem Drehsicherungsbereich 42b ist eine konische Übergangsschräge 64 vorgesehen, die der konischen Innenabschrägung 58 entspricht und als Anschlag für die Spannhülse 56 dient.

Beim Einstecken des Einsteckabschnitts 40 in den Durchsteckkanal 38 findet die konische Anphasung 62 leicht in den Durchsteckkanal 38 hinein, insbesondere wenn dieser an seinem oberen Ausgang, der in Fig. 1 zu sehen ist, konisch erweitert ist. Sobald sich die konische Übergangsschräge 64 dem oberen Ausgang des Durchsteckkanals 38 nähert, ist der Bügelschenkel 16 durch die Außenumfangsfläche der Spannhülse 56 in dem Durchsteckkanal 38 derart zentriert, daß ein Verkippen der Achse A des Bügelschenkels gegenüber dem Durchsteckkanal 38 praktisch nicht mehr möglich ist. Infolge dessen können nunmehr die dachförmigen Einführschrägen 46 der Drehsicherungsrippen 44 problemlos - ggf. nach geringfügigem Nachdrehen des Bügelschenkels 16 gegenüber dem Durchsteckkanal 38 - in die Drehsicherungsnuten 48 finden und der Bügelschenkel kann vollständig eingeschoben werden, solange bis die unteren Enden der dachförmigen Schrägen 46 gegen die Nutendflächen 50 der Drehsicherungsnuten 48 anschlagen.

Wenn dieser Zustand erreicht ist, so kann der Schloßkörper 12 mit dem Schloßbügel 10 zusammengesteckt und verriegelt werden, wobei der Eintauchabschnitt 24 in die Bohrung 28 des Schloßkörpers eintaucht und ein Riegel 66 dank einer Federbelastung in Eingriff mit einer Riegelaufnahme 68 des Eintauchabschnitts 24 springt.

Dabei ist auf folgende Besonderheit hinzuweisen:

Am unteren Ausgang des Durchsteckkanals 38 ist an dem Kunststoffkörper 36 ein ringförmiger Kompressionspuffer 70 angebracht, welcher als druckelastische Feder wirkt. Bevor der Riegel 66 in die Riegelaufnahme 68 einspringen kann, muß der Kompressionspuffer 70 in axialer Richtung komprimiert werden. Ist diese Kompression des Kompressionspuffers eingetreten, so steht eine Zugstrecke 46-68 des Bügelschenkels 16 unter Zugvorspannung, während eine Kompressionsstrecke 50-70 der Halterungseinrichtung 30 unter Druckvorspannung steht. Damit ist der Bügelschenkel 16, da ja die Schenkelummantelungshülse 42 unverschiebbar mit dem Bügelschenkel 16 verbunden ist, axial wackelfrei in der Halterungseinrichtung 30 festgelegt.

Um beim Aufbringen der Spannhülse 56 auf den Bereich 42a der Schenkelummantelungshülse 42 den Bereich 42a einengen zu können und damit die Schenkelummantelungshülse an dem Bügelschenkel 16 festzulegen, sind, wie aus Fig. 5 zu ersehen, an dem Bereich 42a der Schenkelummantelungshülse in Umfangsrichtung abwechselnd Verdickungen 72 und Verdünnungen 74 angebracht.

Zu beachten ist auch noch folgendes:

Der Schlankheitsgrad des Zentrierteils 40a des Einsteckabschnitts 40, welcher sich ausdrücken läßt als das Verhältnis der Länge des Zentrierteils 40a zum Durchmesser des Zentrierteils 40a (siehe Fig. 1) ist verantwortlich für die oben bereits besprochene Zentrierwirkung, die darin besteht, daß nach Eintauchen des Zentrierteils 40a in den Durchsteckkanal 38 die Achse des Bügelschenkels 16 gegenüber der Achse des Durchsteckkanals 38 praktisch nicht mehr taumeln kann.

Weiterhin ist zu beachten, daß der Außendurchmesser des Zentrierteils 40a gemäß Fig. 1 nur geringfügig größer ist als der Außendurchmesser des Eintauchabschnitts 24. Dies bedeutet, daß beim Durchstecken des Bügelschenkels 16 zwischen Speichen eines zu sichernden Rads am Übergang zwischen dem Eintauchabschnitt 24 und dem Zentrierteil 40a kaum eine Verhakung mit einer Speiche eintreten kann.

Weiterhin ist zu beachten, daß die Durchmesserdifferenz zwischen dem Durchmesser des Zentrierteils 40a und dem Durchmesser des Drehsicherungsteils 40b ebenfalls relativ gering ist, so daß auch an dieser Übergangsstelle kaum eine Verhakung mit einer Speiche eintreten kann.

Schließlich ist auch zu beachten, daß die Durchmesserdifferenz zwischen dem Drehsicherungsteil 40b und dem Ummantelungsschlauch 76, welcher den scheitelnahen Bügelschenkelabschnitt 78 umschließt, ebenfalls und zwar ringsum so gering ausfällt, daß auch an dieser Übergangsstelle keine Verhakung mit Speichen eintreten kann.

Alternativ zu der so weit beschriebenen Ausführungsform ist es auch denkbar, den Ummantelungsschlauch 76 und die Schenkelummantelungshülse 42 einstückig auf den Schloßbügel 10 aufzuspritzen oder zumindest einzelne Abschnitte des Ummantelungsschlauches 76 auf den Schloßbügel aufzuspritzen und dabei einen Abschnitt zusammenhängend mit der Schenkelummantelungshülse 42 herzustellen. Wenn dabei von Aufspritzen die Rede ist, so ist vorzugsweise an ein Aufspritzen von thermoplastischem Ummantelungswerkstoff gedacht, es ist aber auch denkbar, den Schloßbügel in eine Gießform einzubringen statt in eine Spritzform und die Ummantelung samt Schenkelummantelungshülse im Gießverfahren anzubringen.

Die Befestigung der Halterungseinrichtung 30 an dem Rahmenrohr 34 ergibt sich aus den Fig. 1, 2 und 11.

An dem Rahmenrohr 34 liegt ein Zugband 80 aus dünnem Metallblech, z. B. Stahlblech, oder Messingblech oder Aluminiumblech an. Die Endbereiche 82 und 84 dieses Zugbands überlappen sich innerhalb eines Ringschluß- und Spannkörpers 86 der zum Zwecke der Aufnahme dieser Endabschnitte 82 und 84 einen Durchtrittskanal 88 aufweist. Der Endbereich 82 ist, wie aus Fig. 11 ersichtlich, gekröpft und an einem Nocken 90 innerhalb des Durchtrittskanals 88 verhakt. Der Einbau des Zugbandes 80 in den Durchtrittskanal 88 des Ringschluß- und Spannkörpers 86 erfolgt durch Durchschieben des Zugbands 80 durch den Durchtrittskanal 88 mit dem vorlaufenden Endbereich 84 so lange, bis der gekröpfte nachlaufende Endbereich 82 sich am Nocken 90 verhakt.

Beim Anbau der Befestigungseinrichtung und damit der Halterungseinrichtung an dem Rahmenrohr 34 wird der Ringschluß- und Spannkörper 86, nachdem er bereits mit dem Zugband 80 vereinigt ist, mit einer Anlagefläche 92 an dem Rahmenrohr 34 angelegt und hierauf der Endbereich 84 durch den Durchtrittskanal 88 gesteckt. Dann wird eine Schraube 92 in die Stellung gemäß Fig. 11 gebracht. Vorzugsweise ist die Schraube 92 bereits vorher in dem Wandteil 94 des Ringschluß- und Spannkörpers 86 in einem Loch 96 des Wandteils 94 vormontiert, so daß sie durch Drehen mittels eines Schraubendrehers aufgrund des Gewindeeingriffs nach unten bewegt werden kann und dabei die sich überlappenden Endbereiche 82 und 84 des Zugbandes 80 durchdringt und schließlich in das Loch 98 des Ringschluß- und Spannkörpers 86 eindringt. Es handelt sich um eine selbstschneidende Schraube 92, so daß keinerlei Gewinde in den Löchern 96 und 98 vorher eingebracht werden müssen. Das Zugband 80 ist aus so dünnem Material hergestellt, daß die Schraube 92 mit ihrer Spitze die beiden Endbereiche des Zugbandes 80 ohne vorherige Lochung durchdringt. Es ist nicht erforderlich, das Zugband vor dem Einschrauben der Schraube 92 besonders zu spannen, da die Spannung, welche den festen Sitz an dem Rahmenrohr 34 bewirkt, nachträglich eingebracht wird, wie im folgenden beschrieben.

Sobald der Ringschluß des Zugbandes 80 hergestellt und die Schraube 92 in die Position gemäß Fig. 11 gebracht ist, wird der Kunststoffkörper 36 mit einem Stützgerüst 100 über den Ringschluß- und Spannkörpers 86 übergestülpt. Das Stützgerüst 100 ist von zwei Paaren einander gegenüberliegender Wände 102 und 104 gebildet. Die Wände 104 sind mit Stützflächen 106 versehen, die annähernd der Rundung des Rahmenrohrs 34 folgen und sich an diesem abstützen können. In dem Stützgerüst 100 sind, wie aus Fig. 2 zu ersehen, Gewindebolzen 108 unverlierbar, jedoch drehbar vormontiert, die in ihren Bolzenköpfen 110 Schlitze oder Inbusvertiefungen zur Aufnahme eines Drehwerkzeugs besitzen. Wenn das Stützgerüst 100 über den Ringschluß- und Spannkörper 86 übergestülpt wird, so finden die Gewindeabschnitte der Gewindebolzen 108 leicht in Bohrungen 112 des Ringschluß- und Spannkörpers 86 hinein und damit zu den Gewindebohrungen von Spannmuttern 114, welche in dem Ringschluß- und Spannkörper 86 ebenfalls unverlierbar vorpositioniert sind. Dann brauchen nur noch die Gewindebolzen 108 mittels eines Werkzeug gedreht zu werden. Das Werkzeug kann leicht an die Bolzenköpfe 110 herangeführt werden, nämlich durch Durchbrüche 116, welche in dem Kunststoffkörper 36 orthogonal zu dem Durchsteckkanal 38 orientiert sind und den Zugang zu den Bolzenköpfen 110 eröffnen, solange der Bügelschenkel 16 nicht in den Durchsteckkanal 38 eingesteckt ist.

Man beachte in Fig. 2, daß die Gewindebolzen 108 oberhalb und unterhalb des Zugbands 80 an diesem vorbeigehen, das Zugband 80 also nicht durchdringen.

Durch Einschrauben der Gewindebolzen 108 in die Gewindemuttern 114 wird der Ringschluß- und Spannkörper 86 von dem Rahmenrohr 34 gemäß Fig. 11 weggezogen, d. h. nach oben bewegt, so daß das Zugband 80 unter Spannung gesetzt und die Stützflächen 106 gegen die Außenumfangsfläche des Rahmenrohrs 34 angedrückt werden. Denkbar wäre auch, daß die Kanten 116 der Stützgerüstwände 102 sich gegen die freien Zugstrecken des Zugbands 80 legen und dieses dadurch spannen.

Besonders zu beachten ist, daß beim Spannen des Zugbands 80 durch die Gewindebolzen 108 nicht gleichzeitig eine Verdrehung der Schrauben 92 stattfindet, da diese schon vorher in die Position gemäß Fig. 11 gebracht worden sind. Das Spannen des Zugbands 80 findet deshalb ohne gleichzeitige Schneidbewegung der Gewindeschrauben 92 gegenüber den Endbereichen 82 und 84 des Zugbands 80 statt. Dies bedeutet, daß die beim Einbringen der Schrauben 92 gebildeten Lochumrandungen der Schraubendurchtrittslöcher während des Spannens der Gewindebolzen 108 schonend behandelt sind. Dies erlaubt es, relativ dünnwandiges Material für das Zugband 80 zu verwenden, welches beim Einbringen der Schrauben 92 leicht durchstoßen werden kann und unschwer an die Krümmung des Rahmenrohrs 34 angelegt werden kann.

Damit ist es möglich, das Zugband 80 ohne vorherige Krümmung zu montieren. Weiterhin ist es möglich, mit ein und demselben Zugband 80 eine Vielzahl von Rahmenrohren unterschiedlichen Durchmessers zur Anbringung der Halteeinrichtung 30 verwenden zu können.

Der Begriff "Langbügelschloß" für Bügelschlösser wird zur Bezeichnung solcher Bügelschlösser verwendet, deren Bügellänge groß genug ist, um entweder zwei in Deckung liegende Teile eines Zweirads, z. B. zwei Gabelschenkel der Vorderradgabel oder der Hinterradgabel, gleichzeitig umfassen zu können oder um einen Rahmenteil eines Zweirads gleichzeitig mit einem stationären Widerlager, z. B. einem Kellerfenstergitter eines Hauses, verbinden zu können. Die erfindungsgemäßen Langbügelschlösser können so ausgebildet sein, daß der eine Bügelschenkel länger ist als der andere, wobei der längere Bügelschenkel ständig in Eingriff mit dem Schloßkörper bleibt und gegenüber diesem gedreht werden kann. Insbesondere werden aber auch solche Bügelschlösser verstanden, deren Bügelschenkel an beiden Eintauchenden mit einer Riegelaufnahme für einen zugehörigen Riegel des Schließwerks versehen sind, so daß der Bügelschenkel insgesamt von dem Schloßkörper abgenommen werden kann.

In den Fig. 3a bis 11a sind Vermaßungssymbole eingetragen, denen in der nachstehenden Tabelle die einer bevorzugten Ausführungsform entsprechenden Größen zugeordnet sind.

| Tabelle der Vermaßungssymbole | | | |
|---|---|---|---|
| **Länge** | **Durchmesser** | **Winkel** | **Radius** |
| L1= 40mm | D1= 18,3mm | W1= 45° | R1= 1mm |
| L2= 3,1mm | D2= 16,4mm | W2= 15° | R2= 4mm |
| L3= 15,2mm | D3= 12,1mm | W3=4x90° (360°) | R3= 2mm |
| L4= 15,6mm | D4= 11,9mm | W4= 90° | R4= 2mm |
| L5= 14,6mm | D5= 16mm | W5= 45° | R5= 2mm |
| L6= 1mm | D6= 14,8mm | W6= 30° | R6= 10mm |
| L7= 6mm | D7= 16,5mm | W7= 60° | R7= 2mm |
| L8= 70mm | D8= 12mm | W8= 15° | |
| L9= 27,3mm | D9= 12mm | | |
| L10= 22,5mm | D10= 15mm | | |
| L11= 8,8mm | | | |
| L12= 9,3mm | | | |
| L13= 0,8mm | | | |
| L14= 4mm | | | |
| L15= 2mm | | | |
| L16= 2mm | | | |
| L17= 26mm | | | |
| L18= 1mm | | | |
| L19= 91,5mm | | | |
| L20= 55mm | | | |

## Patentansprüche

1. Halterungseinrichtung zur Halterung eines Bügelschlosses, insbesondere Langbügelschlosses (10,12), an einer Tragkonstruktion, insbesondere einem mobilen Objekt, etwa einem Zweiradrahmen (34), diese Halterungseinrichtung (30) ausgeführt mit einem Durchsteckkanal (38) zum Durchstecken eines Bügelschenkels (16) des Bügelschlosses (10,12), wobei der Bügelschenkel (16) einen zur Aufnahme in dem Durchsteckkanal (38) bestimmten Einsteckabschnitt (40) aufweist und mit einem Eintauchabschnitt (24) zum Eintauchen in eine Aufnahmebohrung (28) eines Schloßkörpers (12) ausgeführt ist, wobei weiter an der Außenumfangsfläche eines Drehsicherungsteils (40b) des Einsteckabschnitts (40) und an der Innenumfangsfläche des Durchsteckkanals (38) komplementäre Verunrundungsmittel (44,48) vorgesehen sind, um mindestens eine definierte Winkellage des Bügelschenkels (16) gegenüber dem Durchsteckkanal (38) festzulegen, und wobei ein beim Einstecken des Bügelschenkels (16) in den Durchsteckkanal (38) dem Drehsicherungsteil (40b) vorauslaufender Teil des Einsteckabschnitts (40) als ein Zentrierteil (40a) ausgebildet ist, welcher - bevor die Verunrundungsmittel (44,48) des Einsteckabschnitts (40) und des Durchsteckkanals (38) beim Einstecken des Einsteckabschnitts (40) in den Durchsteckkanal (38) miteinander in drehhemmenden Eingriff treten - eine drehbehinderungsfreie Zentrierung des Einsteckabschnitts (40) in dem Durchsteckkanal (38) bewirkt,
dadurch gekennzeichnet,
daß der Zentrierteil (40a) einen Schlankheitsgrad s entsprechend seinem Länge (L17) /Durchmesser (D5) -Verhältnis von mindestens 1, vorzugsweise mindestens 1,5, höchst vorzugsweise mindestens 2,0 besitzt.

2. Halterungseinrichtung nach Anspruch 1,
dadurch gekennzeichnet,
daß der Außendurchmesser (D5) des Zentrierteils (40a) größer ist als der Außendurchmesser (D9) des Eintauchabschnitts (24), jedoch kleiner ist als das 1,4-fache, vorzugsweise kleiner als das 1,3-fache, des Außendurchmessers (D9) des Eintauchabschnitts (24).

3. Halterungseinrichtung nach einem der Ansprüche 1 und 2,
dadurch gekennzeichnet,
daß der maximale radiale Vorsprung des Einsteckabschnitts (40) oder eines an den Einsteckabschnitt (40) anschließenden Nachlaufteils des Einsteckabschnitts (40) gegenüber der Umfangsfläche eines an den Einsteckabschnitt (40) bzw. den Nachlaufteil anschließenden scheitelnahen Bügelschenkelabschnitts (78) kleiner ist als das 0,5fache, vorzugsweise kleiner als das 0,3fache, höchst vorzugsweise kleiner als das 0,2fache, des halben Außendurchmessers des scheitelnahen Bügelschenkelabschnitts (78).

4. Halterungseinrichtung nach einem der Ansprüche 1 - 3,
dadurch gekennzeichnet,
daß der Übergang von dem Drehsicherungsteil (40b) des Einsteckabschnitts (40) zum scheitelnahen Bügelschenkelabschnitt (78) bei vollständiger Aufnahme des Einsteckabschnitts (40) in dem Durchsteckkanal (38) wenigstens annähernd mit dem scheitelnahen Ende des Durchsteckkanals (38) zusammenfällt.

5. Halterungseinrichtung nach einem der Ansprüche 1 - 4,
dadurch gekennzeichnet,
daß die Länge (L17) des Zentrierteils (40a) des Einsteckabschnitts (40) und die Länge (L1) des Drehsicherungsteils (40b) des Einsteckabschnitts (40) jeweils mindestens 1/3 und weniger als 3/4 der Gesamtlänge (L8) des Einsteckabschnitts (40) ausmachen.

6. Halterungseinrichtung nach einem der Ansprüche 1 - 5,
dadurch gekennzeichnet,
daß die Verunrundungsmittel des Drehsicherungsteils (40b) von axial verlaufenden Drehsicherungsrippen (44) und die Verunrundungsmittel des Durchsteckkanals (38) von komplementären Drehsicherungsnuten (48) gebildet sind.

7. Halterungseinrichtung nach einem der Ansprüche 1 - 6,
dadurch gekennzeichnet,
daß der Zentrierteil (40a) oder/und der Drehsicherungsteil (40b) eine im wesentlichen zylindrische Außenhüllfläche aufweist.

8. Halterungseinrichtung nach einem der Ansprüche 1 - 7,
dadurch gekennzeichnet,
daß der Außendurchmesser (D1) der Hüllfläche des Drehsicherungsteils (40b) größer als der Außendurchmesser (D5) der Hüllfläche des Zentrierteils (40a) ist, jedoch weniger als das 1,2fache des letzteren beträgt.

9. Halterungseinrichtung nach einem der Ansprüche 1 - 8,
dadurch gekennzeichnet,
daß an dem Bügelschloß (10,12) und an der Halterungseinrichtung (30) Axialanschlagmittel (50,46;70,12) vorgesehen sind, welche einer axialen Festlegung des Bügelschlosses (10,12) gegenüber der Halterungseinrichtung (30) dienen.

10. Halterungseinrichtung nach Anspruch 9,
dadurch gekennzeichnet,
daß eine erste Gruppe von Axialanschlagmitteln bügelschenkelseitig von schloßkörpernahen Enden (46) von Drehsicherungsrippen (44) des Drehsicherungsteils (40b) und kanalseitig von den schloßkörpernahen Enden (50) von Drehsicherungsnuten (48) des Durchsteckkanals (38) gebildet sind.

11. Halterungseinrichtung nach Anspruch 10,
dadurch gekennzeichnet,
daß eine zweite Gruppe von Axialanschlagmitteln von einer Anschlagfläche der Halterungseinrichtung (30) am Ausgang des Durchsteckkanals (38) und einer Anschlagfläche des Schloßkörpers (12) gebildet ist.

12. Halterungseinrichtung nach einem der Ansprüche 1 - 11,
dadurch gekennzeichnet,
daß der Einsteckabschnitt (40) und ein etwa zugehöriger Nachlaufteil von einer Schenkelummantelungshülse (42) gebildet ist, welche auf dem Bügelschenkel (16) unverdrehbar festgelegt ist.

13. Halterungseinrichtung nach Anspruch 12,
dadurch gekennzeichnet,
daß die Außenumfangsfläche der Schenkelummantelungshülse (42) in ihrem schloßkörperfernen Endbereich rotationssymmetrisch bezogen auf die Achse (A) des Bügelschenkels (16) ist.

14. Halterungseinrichtung nach einem der Ansprüche 12 und 13,
dadurch gekennzeichnet,
daß die Schenkelummantelungshülse (42) - wenn vollständig in den Durchsteckkanal (38) eingesteckt - an ihrem schloßkörperfernen Ende bündig zum schloßkörperfernen Ausgang des Durchsteckkanals (38) liegt.

15. Halterungseinrichtung nach einem der Ansprüche 1 - 14,
dadurch gekennzeichnet,
daß die Schenkelummantelungshülse (42) auf dem Bügelschenkel (16) durch Spannmittel (56) unverdrehbar festgelegt ist, welche rotationssymmetrisch in bezug auf die Bügelschenkelachse (A) sind.

16. Halterungseinrichtung nach Anspruch 15,
dadurch gekennzeichnet,
daß eine Spannhülse (56), vorzugsweise aus Metall, den Zentrierteil (40a) umschließt und gegebenenfalls bildet.

17. Halterungseinrichtung nach einem der Ansprüche 1 - 16,
dadurch gekennzeichnet,
daß die Schenkelummantelungshülse (42) aus Kunststoff hergestellt ist.

18. Halterungseinrichtung nach einem der Ansprüche 1 - 17,
dadurch gekennzeichnet,
daß die Halterungseinrichtung (30) zumindest im Umgebungsbereich des Durchsteckkanals (38) aus Kunststoff hergestellt ist.

19. Halterungseinrichtung nach einem der Ansprüche 12 - 18,
dadurch gekennzeichnet,
daß die Schenkelummantelungshülse (42) aus einem im Vergleich zum Werkstoff der Halterungseinrichtung (a30) weicheren Werkstoff hergestellt ist.

20. Halterungseinrichtung nach einem der Ansprüche 1 - 19,
dadurch gekennzeichnet,
daß wenigstens ein Teil des Bügelschenkels (16) in einem entsprechenden Teil des Durchsteckkanals (38) unter axialer Verspannung axial festgelegt ist, indem eine axiale Kompressionsstrecke (50,70) des Umgebungsbereichs des Durchsteckkanals (38) von einer axialen Zugstrecke (46,68) des Bügelschenkels (16) unter Kompression gehalten ist.

21. Halterungseinrichtung nach Anspruch 20,
dadurch gekennzeichnet,
daß in der axialen Kompressionsstrecke (50,70) ein weichelastischer Kompressionspuffer (70) enthalten ist.

22. Halterungseinrichtung nach Anspruch 21,
dadurch gekennzeichnet,
daß der Kompressionspuffer (70) zwischen einem schloßkörpernahen Ausgang des Durchsteckkanals (38) und einer Anschlagfläche des Schloßkörpers (12) liegt.

23. Halterungseinrichtung nach Anspruch 22,
dadurch gekennzeichnet,
daß der axiale Kompressionspuffer (70) an der Halterungseinrichtung (30) angebracht ist.

24. Halterungseinrichtung nach einem der Ansprüche 20 - 23,
dadurch gekennzeichnet,
daß der Schloßkörper (12) mit einem Schließwerk (14) ausgerüstet ist, welches beim Aufstecken des Schloßkörpers (12) auf den Bügelschenkel (16) selbsttätig mit dem Bügelschenkel (16) in Verriegelungseingriff tritt.

25. Halterungseinrichtung nach einem der Ansprüche 12 - 24,
dadurch gekennzeichnet,
daß die den Einsteckabschnitt (40) bildende Schenkelummantelungshülse (42) durch axiale Positionierungsmittel (52,54) an dem Bügelschenkel (16) festgelegt ist.

26. Halterungseinrichtung nach einem der Ansprüche 1 - 25,
dadurch gekennzeichnet,
daß der Bügelschenkel (16) von einem Ummantelungsschlauch (76), insbesondere einem Ummantelungsschlauch (76) aus weichelastischem Kunststoff oder Gummi, ummantelt ist.

27. Halterungseinrichtung zur Halterung eines Bügelschlosses, insbesondere Langbügelschlosses (10,12), an einer Tragkonstruktion, insbesondere einem mobilen Objekt, etwa einem Zweiradrahmen (34), diese Halterungseinrichtung (30) ausgeführt mit einem Durchsteckkanal (38) zum Durchstecken eines Bügelschenkels (16) des Bügelschlosses (10,12), wobei der Bügelschenkel einen zur Aufnahme in dem Durchsteckkanal (38) bestimmten Einsteckabschnitt (40) aufweist und mit einem Eintauchabschnitt (24) zum Eintauchen in eine Aufnahmebohrung (28) eines Schloßkörpers (12) ausgeführt ist, wobei weiter an der Außenumfangsfläche eines Drehsicherungsteils (40b) des Einsteckabschnitts (40) und an der Innenumfangsfläche des Durchsteckkanals (38) komplementäre Verunrundungsmittel (44,48) vorgesehen sind, um mindestens eine definierte Winkellage des Bügelschenkels (16) gegenüber dem Durchsteckkanal (38) festzulegen und wobei der Einsteckabschnitt (40) von einer den Bügelschenkel (16) unverdrehbar umschließenden Schenkelummantelungshülse (42) gebildet ist, insbesondere nach einem der Ansprüche 1 - 26,
dadurch gekennzeichnet,
daß die Schenkelummantelungshülse (42) auf dem Bügelschenkel (16) durch einen geschlossenen Spannring (56) festgespannt ist.

28. Halterungseinrichtung nach Anspruch 27,
dadurch gekennzeichnet,
daß der Spannring (56) als Metallrohrabschnitt ausgebildet ist.

29. Halterungseinrichtung nach einem der Ansprüche 27 und 28,
dadurch gekennzeichnet,
daß der Spannring (56) einen Zentrierteil (42a) der Schenkelummantelungshülse (42) umschließt und ggf. bildet, welcher einem Drehsicherungsteil (42b) der Schenkelummantelungshülse (42) beim Einstecken in den Durchsteckkanal (38) vorausläuft.

30. Halterungseinrichtung zur Halterung eines Bügelschlosses, insbesondere Langbügelschlosses (10,12), an einer Tragkonstruktion, insbesondere einem mobilen Objekt, etwa einem Zweiradrahmen (34), diese Halterungseinrichtung (30) ausgeführt mit einem Durchsteckkanal (38) zum Durchstecken eines Bügelschenkels (16) des Bügelschlosses (10,12), wobei der Bügelschenkel (16) einen zur Aufnahme in dem Durchsteckkanal (38) bestimmten Einsteckabschnitt (40) aufweist und mit einem Eintauchabschnitt (24) zum Eintauchen in eine Aufnahmebohrung (28) eines Schloßkörpers (12) ausgeführt ist, wobei weiter an der Außenumfangsfläche eines Drehsicherungsteils (40b) des Einsteckabschnitts (40) und an der Innenumfangsfläche des Durchsteckkanals (38) komplementäre Verunrundungsmittel (44,48) vorgesehen sind, um mindestens eine definierte Winkellage des Bügelschenkels (16) gegenüber dem Durchsteckkanal (38) festzulegen, und wobei der Bügelschenkel (16) an dem Durchsteckkanal (38) gegen axiale Verschiebung durch Anschlagmittel (46,50;70,12) feststellbar ist,
dadurch gekennzeichnet,
daß die Anschlagmittel (46,50;70,12) eine erste Gruppe von Anschlagflächen umfassen, welche beim Einschieben des Einsteckabschnitts (40) in den Durchsteckkanal (38) zusammentreten, und eine zweite Gruppe von Anschlagflächen, welche beim Zusammenstecken des Eintauchabschnitts (24) und der Aufnahmebohrung (28) des Schloßkörpers (12) zusammentreten.

31. Halterungseinrichtung nach Anspruch 30,
dadurch gekennzeichnet,
daß ein zwischen der ersten Gruppe (46,50) und der zweiten Gruppe (70,12) von Anschlagmitteln sich erstreckender Teil des Bügelschenkels (16) in einem entsprechenden Teil des Durchsteckkanals (38) unter axialer Verspannung festgelegt ist, indem eine zwischen der ersten Gruppe von Anschlagmitteln (46,50) und der zweiten Gruppe von Anschlagmitteln (70,12) liegende Kompressionsstrecke (50,70) des Umgebungsbereichs des Durchsteckkanals (38) von einer zwischen diesen beiden Gruppen von Anschlagmitteln gelegenen axialen Zugstrecke (46,48) des Bügelschenkels (16) unter Kompression gehalten ist.

32. Halterungseinrichtung nach Anspruch 31,
dadurch gekennzeichnet,
daß in der axialen Kompressionsstrecke (50,70) ein weichelastischer Kompressionspuffer (70) enthalten ist.

33. Halterungseinrichtung nach Anspruch 32,
dadurch gekennzeichnet,
daß der Kompressionspuffer (70) zwischen einem schloßkörpernahen Ausgang des Durchsteckkanals (38) und einer Anschlagfläche des Schloßkörpers (12) liegt und vorzugsweise an der Halterungseinrichtung (30) befestigt ist.

34. Halterungseinrichtung zur Halterung eines Bügelschlosses, insbesondere Langbügelschlosses (10,12), an einer Tragkonstruktion, insbesondere einem mobilen Objekt, etwa einem Zweiradrahmen (34), diese Halterungseinrichtung ausgeführt mit einem Durchsteckkanal (38) zum Durchstecken eines Bügelschenkels (16) des Bügelschlosses (10,12), wobei der Bügelschenkel (16) einen zur Aufnahme in dem Durchsteckkanal (38) bestimmten Einsteckabschnitt (40) aufweist und mit einem Eintauchabschnitt (24) zum Eintauchen in eine Aufnahmebohrung (28) eines Schloßkörpers (12) ausgeführt ist, wobei weiter an der Außenumfangsfläche eines Drehsicherungsteils (40b) des Einsteckabschnitts (40) und an der Innenumfangsfläche des Durchsteckkanals (38) komplementäre Verunrundungsmittel (44,48) vorgesehen sind, um mindestens eine definierte Winkellage des Bügelschenkels (16) gegenüber dem Durchsteckkanal (38) festzulegen, insbesondere nach einem der Ansprüche 1 - 33,
dadurch gekennzeichnet,
daß der Einsteckabschnitt (40) von einer Schenkelummantelungshülse (42) aus Kunststoff gebildet ist und daß der Durchsteckkanal (38) in Kunststoff ausgeführt ist, wobei der Kunststoff der Schenkelummantelungshülse (42) weicher ist als der den Durchsteckkanal (38) begrenzende Kunststoff.

35. Schloßbügel für ein Bügelschloß, insbesondere ein Langbügelschloß (10,12), umfassend einen Bügelkörper (10) mit Eintauchabschnitten (24) zum Eintauchen in Aufnahmebohrungen (28) eines Schloßkörpers (12) und mit einer Beschichtung (76) des Bügelkörpers (10) in wenigstens einem Teilbereich,
dadurch gekennzeichnet,
daß die Beschichtung (76) auf den Bügelkörper (10) durch Formspritzen oder Formgießen aus Kunststoff gebildet ist.

36. Schloßbügel nach Anspruch 35,
dadurch gekennzeichnet,
daß die Beschichtung einen Einsteckabschnitt (40) an mindestens einem Bügelschenkel (16) umfaßt, welcher zum Durchstecken durch einen Durchsteckkanal (38) einer Halterungsvorrichtung (30) ausgebildet ist und mit Formschlußmitteln, insbesondere Dreh- (44) oder/und Axialsicherungsmittel (46) zur entsprechenden Festlegung in dem Durchsteckkanal (38) ausgeführt ist.

37. Befestigungseinrichtung zur Befestigung eines ZweiradZubehörteils an einem Rahmenrohr (34) des Zweirads, insbesondere zur Befestigung der Halterungseinrichtung (30) nach einem der Ansprüche 1 - 34, an einem Rahmenrohr (34), umfassend ein Zugband (80) zum Umschließen des Rahmenrohrs (34), einen Ringschluß- und Spannkörper (86) in Verbindung mit dem Zugband (80), wobei nach Herstellung eines Ringschlusses ein Ringschluß-Überlappungsbereich des Zugbandes (80) gebildet ist und dieser Ringschluß durch mindestens ein in dem Ringschluß- und Spannkörper (86) abgestütztes, das Zugband (80) durchdringendes Ringschlußsicherungsmittel (92) gegen Ringschlußauflösung gesichert ist, wobei weiter der Ringschluß- und Spannkörper (86) innerhalb eines an dem Rahmenrohr (34) oder/und dem Zugband (80) im Bereich des Rahmenrohrs (34) abgestützten Stützgerüsts (100) aufgenommen ist und wobei mindestens ein Gewindespanntrieb (108,114) zwischen dem Stützgerüst (100) und dem Ringschluß- und Spannkörper (86) vorgesehen ist,
dadurch gekennzeichnet,
daß der Gewindespanntrieb (108,114) an dem Ringschluß- und Spannkörper (6) ohne Durchdringung des Zugbands (80) angreift.

38. Befestigungseinrichtung nach Anspruch 37,
dadurch gekennzeichnet,
daß der Ringschluß- und Spannkörper (86) einen ZugbandDurchtrittskanal (88) aufweist, durch welchen Endabschnitte (2,84) des Zugbands (80) einander überlappend hindurchtreten, wobei das mindestens eine Ringschlußsicherungsmittel (92) von einem Stift oder einer Schraube (92) gebildet ist, welche innerhalb des Ringschluß- und Spannkörpers (86) den Durchtrittskanal (88) und innerhalb des Durchtrittkanals (88) die sich überlappenden Teile des Zugbands (80) durchdringt und ggf. zwischen Begrenzungswänden des Durchtrittskanals (88) verklemmt.

39. Befestigungseinrichtung nach Anspruch 38,
dadurch gekennzeichnet,
daß der Stift bzw. die Schraube (92) in dem Ringschluß- und Spannkörper(86) einen unverlierbaren Sitz bereits vor dem Durchdringen des Durchtrittskanals (88) besitzt.

40. Befestigungseinrichtung nach einem der Ansprücze 38 und 39,
dadurch gekennzeichnet,
daß das Zugband (80) zum Durchstoßenwerden von Stift bzw. Schraube (92) an beliebiger Stelle ohne Vorbohren oder Vorverformen ausgebildet ist.

41. Befestigungseinrichtung nach einem der Ansprüche 37 - 40,
dadurch gekennzeichnet,
daß das Zugband (80) ein Metallband ist.

42. Befestigungseinrichtung nach einem der Ansprüche 37 - 41,
dadurch gekennzeichnet,
daß das Zugband (80) an einem Ende (82) mit Formschlußmitteln ausgeführt ist, welche nach Durchziehen des Zugbands (80) durch den Durchtrittskanal (88) in Formschlußeingriff mit Gegenformschlußmitteln (90) des Ringschluß- und Spannkörpers (86) treten.

43. Befestigungseinrichtung nach einem der Ansprüche 37 - 42,
dadurch gekennzeichnet,
daß der mindestens eine Gewindespanntrieb (108,114) einen Spannbolzen (108) umfaßt, welcher in Achsrichtung des Ringschlusses seitlich des Zugbands (80) an diesem vorbeigeht.

44. Befestigungseinrichtung nach einem der Ansprüche 37 - 43,
dadurch gekennzeichnet,
daß der mindestens eine Gewindespanntrieb (108,114) eine Spannwerkzeug-Angriffsstelle (110) aufweist, welche ggf. bei Anbringung eines Bügelschlosses (10,12) an dem als Bügelschloßhalterung (30,82) ausgebildeten Zweirad-Zubehörteil unzugänglich ist.

45. Befestigungseinrichtung nach Anspruch 44,
dadurch gekennzeichnet,
daß für den Zutritt des Spannwerkzeugs zu der Spannwerkzeug-Angriffsstelle (110) ein Werkzeugzutrittskanal (116) in dem Zubehörteil vorgesehen ist, welcher den Durchsteckkanal (38) für den Bügelschenkel (16) kreuzt und nach Einsetzen eines Bügelschenkels (16) in diesen Durchsteckkanal (38) verschlossen ist.

46. Befestigungseinrichtung nach einem der Ansprüche 37 - 45,
dadurch gekennzeichnet,
daß ein Gewindebolzen (108) mit Spannwerkzeug-Angriffsstelle (110) des Gewindespanntriebs (108,114) unverlierbar in dem Zweirad-Zubehörteil aufgenommen und drehbar gelagert ist und daß eine zugehörige Mutter (114) des Gewindespanntriebs (108,114) in dem Ringschluß- und Spannkörper (86) unverlierbar aufgenommen ist, wobei in dem Ringschluß- und Spannkörper (86) eine Zentrierbohrung (112) vorgesehen ist, in welche beim Aufsetzen des Stützgerüsts (100) auf den Ringschluß- und Spannkörper (86) der Gewindebolzen (108) eintritt und so den Zugang zu der Gewindebohrung der Spannmutter (114) findet.
